# EUROPEAN PATENT SPECIFICATION

(11) **EP 1 457 718 B1**
(45) Date of publication and mention of the grant of the patent: **05.10.2011**
(21) Application number: 03290641.4
(22) Date of filing: 14.03.2003
(51) Int. Cl.: F16J 15/08

(54) **Cylinder head gasket arrangements for engine assemblies**
Zylinderkopfdichtungsanordnung für einen Motorenzusammenbau
Dispositifs de joint de culasse pour ensembles moteur

(43) Date of publication of application: 15.09.2004
(73) Proprietor: Renault s.a.s., 92100 Boulogne Billancourt (FR)
(72) Inventor: Morin, Guillaume, 92310 Sevres (FR); Valentin, Fabien, 78170 La Celle Saint Cloud (FR); Quintard, Sophie, 92210 Saint-Cloud (FR)
(74) Representative: Rougemont, Bernard

(56) References cited:
- US-A- 4 721 315
- US-B1- 6 431 554

## Description

The present invention relates to gasket arrangements and in particular to a cylinder head gasket arrangement for an engine assembly.

The purpose of a cylinder head gasket is to ensure good sealing between the cylinder head and the cylinder block in an engine assembly. The seal is necessary to keep the cylinder gases in the cylinders. It also prevents interaction between cylinder gases and passageways used in the cylinder block and head for the transport of coolant, lubricant or other fluids as necessary, as well as preventing their interaction with the exterior. The desired sealing is attempted through forcing the cylinder head and cylinder block towards each other such that they squeeze the cylinder head gasket between them and is generally implemented by means of a clamping force applied through mechanical fixings spaced around the cylinders, e.g. cylinder head bolts or studs and nuts.

It is possible for the forces used in holding down the cylinder head to deform substantially directly one or more parts of the assembly, such as the cylinder head or even the cylinder block. Deformation may be caused by the torque applied to cylinder head fixings acting about a combustion gas sealing ring of the cylinder head gasket and this problem may be particularly apparent in assemblies including large components, such as cylinder heads or blocks, made from aluminium, magnesium or an alloy or equivalent of such materials.

Good cylinder head gasket design and assembly therefore involves optimisation of head gasket contact regions and adaptation of local clamping forces for best sealing with minimised local deformation under static conditions.

A prior art cylinder head gasket arrangement is proposed in JP-7198040, in which fire rings provided on the head gasket for the cylinder barrels do not follow a circular path around them. In a radial direction from a centre line through the cylinder bore, the central part of the sealing beads is further away from the cylinder bore in the region of each cylinder head bolt than it is in an inter-barrel region or in a lateral region away from the cylinder head bolt. Similar examples may be found in US patents 4721315, 5957463 and 6431554. In each of these cases, the general idea is to more evenly distribute the tightening pressures around the cylinder barrels, e.g. so as to reduce the chances of barrel distortion.

Many prior art proposals try to address the issue of cylinder block and head distortion in squeeze under static conditions, but do not adequately address the problem of dynamically generated distortion such as cyclic variations interfering with the efficiency of the seal provided by the cylinder head gasket. For example, in some prior art arrangements the fire rings may include portions that are joined by straight lines or by changing the direction of a curve. Neither of these arrangements may be best suited to resisting cyclic deformation forces, which can for example change their vectors.

Large combustion pressures are generated in the cylinders and when these impinge on the cylinder head they can tend to push it away from the cylinder block or distort it and thus reduce the security of the head gasket seal. In addition, cyclic movements or distortion generated by combustion pressures or rotating masses may contribute to or exacerbate the tendency towards seal weakening. The effects of these characteristics of cyclic distortions may prove difficult to control and may for example cause cylinder bore or head distortion or induce elements of twisting about the cylinder head fixings.

Cyclic distortion may be experienced in one or both of the cylinder block and the cylinder head and may as a consequence provoke associated cyclic variations in the sealing ability of the cylinder head gasket. These cyclic variations may induce fatigue in parts of the cylinder head gasket which could eventually lead to failure of at least part of the seal.

Apart from causing problems with sealing, both static and dynamic/cyclic deformation can translate both individually or in combination into running problems for reciprocating or otherwise moving components associated with the cylinder head or block. Such problems may affect camshafts, cylinder valve gear, piston running clearances, cylinder ovality and oil consumption.

Best practice in cylinder head gasket design and assembly should therefore look not only to reducing static deformation, but should also look to limiting the effects of cyclic variations on the quality and security of the cylinder head-to-block seal provided by the cylinder head gasket.

It is an object of the present invention to provide an improved cylinder head gasket arrangement for an engine assembly.

Accordingly, the present invention provides a cylinder head gasket arrangement with an engine assembly, said engine assembly comprising a cylinder block having defined therein at least one cylinder barrel and a cylinder head adapted to be attached to said cylinder block, said arrangement including a cylinder head gasket adapted to be compressed between said cylinder head and said cylinder block and comprising a sheet member supporting a sealing ring adapted to seal around said cylinder barrel, characterised in that said sealing ring is adapted to follow, around at least a portion of said cylinder barrel, a curvilinear path lying substantially along a cylinder block neutral fibre associated with said cylinder barrel.

It is an advantage of the present invention that, by following the neutral fibre, cylinder head gasket design helps reduce bore distortion and demonstrates robustness against cyclic distortions. The or each sealing ring preferably follows the neutral fibre for as far around its associated cylinder barrel as is practical with respect to the material available surrounding that cylinder barrel and also preferably, in a multi-cylinder block, taking into account the need to accommodate the sealing rings of neighbouring cylinder barrels.

Said sealing ring may be adapted to follow a single closed curve. For an intermediate cylinder, said path may comprise a substantially elliptical curve.

Said cylinder block may comprise a multi-barrel cylinder block and said cylinder head gasket may include a sealing ring associated with each said cylinder barrel, wherein sealing rings associated with neighbouring said cylinder barrels follow respective said curvilinear paths that, in an inter-cylinder region, substantially follow or converge towards an inter-cylinder neutral fibre of said cylinder block.

Said cylinder block may comprise a multi-barrel cylinder block and said cylinder head gasket may include a sealing ring associated with each said cylinder barrel, wherein sealing rings associated with neighbouring said cylinder barrels follow respective said curvilinear paths that, in an inter-cylinder region, are substantially symmetrically disposed about an inter-cylinder neutral fibre of said cylinder block.

Said engine may comprise a multi-cylinder engine and said gasket sheet member may further support a sealing bead, such as a corrugation or elastomeric seal, that is adapted to follow a neutral fibre in at least a portion of an inter-cylinder region.

Said gasket sheet member may comprise a metallic sheet, preferably a multi-layer metallic laminate, and the or each said sealing ring may comprise a combustion gas seal, such as a fire ring.

The present invention also provides a method of producing a cylinder head gasket, the method including:
a) providing a sheet member defining therethrough one or more cylinder barrel holes; and
b) providing around one or more of said cylinder barrel holes a sealing ring that is adapted to follow, around at least a portion of a said cylinder barrel hole, a curvilinear path lying substantially along a cylinder block neutral fibre associated with said cylinder barrel hole.

Said cylinder block neutral fibre may comprise a neutral fibre surrounding a cylinder barrel defined in a cylinder block of an engine, with which engine is associated in use a cylinder head gasket made in accordance with the method of the present invention.

The present invention also provides an engine assembly including a cylinder head gasket arrangement according to the present invention or a cylinder head gasket made using the method of the present invention.

Said engine assembly may include a cylinder block comprising aluminium, magnesium or an alloy including at least one thereof. Said cylinder block may comprise a cylinder liner that defines a said cylinder barrel.

The present invention will now be described by way of example only and with reference to the accompanying drawings, in which :
Figure 1 is a plan view of a cylinder block having a cylinder head gasket according to an embodiment of the present invention laying on top thereof;
Figure 2 is a vertical section through the arrangement of Figure 1 along the line A to A and having a cylinder head mounted thereto;
Figure 3 is a vertical section through the arrangement of Figure 1 along the line B to B and having a cylinder head mounted thereto; and
Figure 4 is a variation to the view of Figure 3, the variation comprising the inclusion of a cylinder liner.

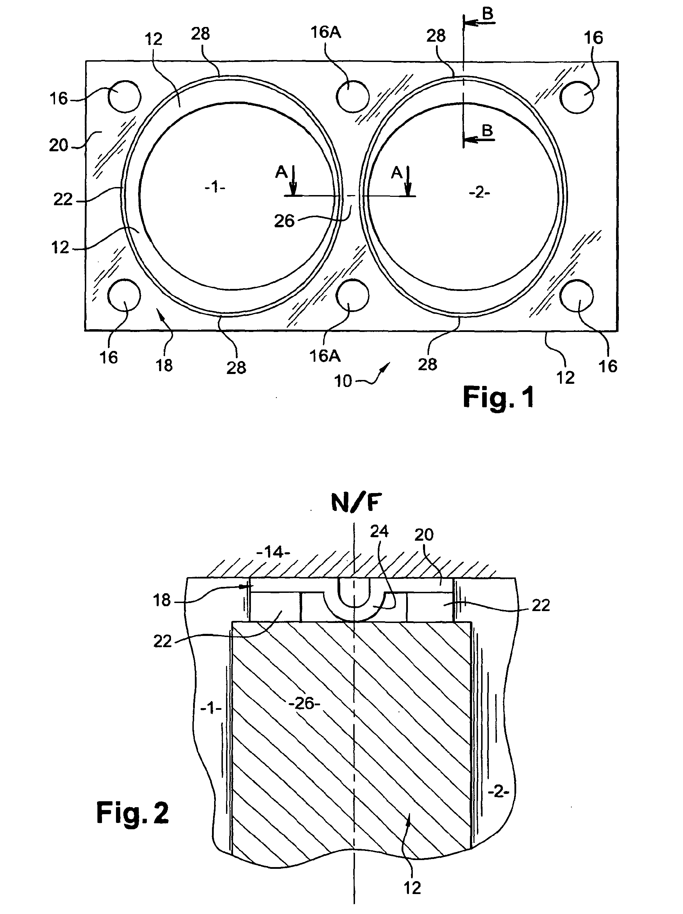

Referring to the figures and in particular for the moment to Figures 1 to 3, an engine assembly 10 comprises a cylinder block 12 in which are defined a series of cylinder barrels in-line. The cylinder block 12 may comprise a block of an in-line engine or may comprise a bank of cylinders of a multi-cylinder engine. For the purposes of illustration, the cylinder block 12 includes at least three cylinders, of which only the first two cylinders 1, 2 are illustrated. The illustrated cylinders 1, 2 are an end cylinder 1 and an intermediate cylinder 2.

The end cylinder 1 represents a cylinder at one end of the block 12, i.e. front or rear end. In the example of an in-line engine 10, such an end cylinder 1 is flanked on only one side by another cylinder 2, which side faces in towards the rest of the row of cylinders 2. The intermediate cylinder 2 represents a cylinder that is flanked on either side by other cylinders, illustrated in Figure 1 as the end cylinder 1 on one side and flanked on the other side by a further cylinder (not illustrated). This further cylinder may comprise an end cylinder in the case of a three-cylinder cylinder block or bank 12 or may be a further intermediate cylinder in the case of an engine 10 having a cylinder block or bank 12 defining at least four cylinders in-line.

A cylinder head 14 is adapted to be attached to the cylinder block 12 by being clamped down onto the block 12 using a set of mechanical fixings (none illustrated). The mechanical fixings may comprise a set of cylinder head bolts or studs that are used to attach the cylinder head 14 to the block 12 via a set of fixing holes 16, 16A spaced apart around and between the cylinder barrels 1, 2. As illustrated in Figure 1, some fixing holes 16A may be common between neighbouring barrels 1, 2.

A cylinder head gasket 18 is compressed between the cylinder head 14 and the cylinder block 12 during assembly of the engine 10 and stays compressed in position in use. The cylinder head gasket 18 comprises a sheet member 20 that defines cylinder holes therethrough associated one with each cylinder 1, 2 and around each of which holes the head gasket 18 supports a sealing ring 22 that defines the border of its associated cylinder barrel hole.

The sheet member 20 may comprise a single layer metallic sheet or a multi-layer metallic foil laminate. For each cylinder 1, 2, the sealing ring 22 preferably comprises a combustion gas seal such as those referred to sometimes in the art as a fire ring. Each sealing ring 22 surrounds its associated cylinder barrel 1, 2 following a curved path that will be described in greater detail below. It will be noted, however, that generally the sealing rings 22 do not follow the outer rim of the cylinder barrel 1, 2 itself but are spaced radially away from it and furthermore are not necessarily in the form of a perfect circle. The primary purpose of the sealing rings 22 is to seal between the cylinder head 14 and the cylinder block 12 against the escape of combustion gases from those cylinders. The sealing rings 22 also protect the cylinder barrels 1, 2 against leakage inwards of lubricating oil, coolant or other fluid passing between the cylinder block 12 and the cylinder head 14 and against interaction with the external environment. The sealing rings 22 may transfer compressive forces into the cylinder block 12 during and after squeeze of the head gasket 18 during cylinder head assembly to the cylinder block 12.

As well as a hole for each cylinder 1, 2, the head gasket 18 may also define further holes (none illustrated) that are associated with fluid passages such as cooling liquid or oil channels. To seal around at least these holes, the head gasket 18 preferably also supports one or more sealing beads 24. The sealing beads 24 illustrated are shown by way of example in the form of a corrugation in the sheet member 20. Such a sealing bead 24 may be produced by means of a deformation technique, for example by rolling or stamping. Equivalent arrangements to a corrugation may be used, such as an elastomeric sealing rib formed for example from a resilient material such as a rubber compound.

When compressed in the squeeze joint, these beads 24 benefit from a localisation of contact pressure along their line of action that is adequate to achieve a satisfactory seal around, for example, oil or coolant channels passing through the head gasket 18. Such sealing beads 24 are typically used around passages with lower pressure sealing requirements than the high pressure requirements met by the sealing rings 22. These sealing beads 24 may also pass along the cylinder block to cylinder head interface in regions where there are no holes in the cylinder block 12 or cylinder head 14 and may be used there so as to reduce wavy distortions in the sheet layer 20.

The sealing rings 22 are more rigid than the or each sealing bead 24 and the tightening forces from the mechanical fasteners may be transferred into the cylinder block 12 largely through those sealing rings 22. In order to keep to a minimum the deformation of the cylinder barrels 1, 2 and furthermore to reduce the effects of cyclic movements on the sealing efficiency of the sealing rings 22, the present invention optimises the passage of compression forces with respect to the cylinder barrel walls. This is achieved by adapting the portion of the cylinder head gasket 18 that transfers the most compression to follow substantially the neutral fibre N/F around each cylinder barrel 1, 2. The portion of the cylinder head gasket 18 that transfers the most compressive force into the cylinder block 12 often comprises the cylinder head gasket's combustion gas sealing rings 22, which surround the or each cylinder barrel 1, 2.

The term neutral fibre is generally used to refer to the region of a component that experiences the smallest expansions when the component is subjected to bending stresses. In the particular case of the present invention, the neutral fibre may therefore be considered to refer to a zone that extends substantially vertically through the cylinder block, is disposed radially further away from the cylinder centre-line than the cylinder barrel rim/wall and in which no or only slight tensile stresses or compression stresses are exerted in bending. In bending, the neutral fibre remains substantially unstretched and uncompressed. The further the cylinder block fibres are from this neutral fibre, the more elongation or compression may occur for a given bend radius. A change in radius of the associated cylinder barrel away from its nominal value may occur through localised high spots in the cylinder block or cylinder head resulting from bolting down the cylinder head or through cyclic distortion experienced during running, e.g. as cylinder pressures rise and fall.

The thickness of the cylinder block material may vary around the circumference of one or more cylinder barrels 1, 2, which as illustrated may give a narrow inter-cylinder region 26. Such an arrangement may be adopted for example to keep the length of the cylinder block 12 down and thus the length of the engine 10 to a minimum. This may result in one or more of the sealing rings 22 running along a curvilinear path that is not a perfect circle, so as to adopt whatever form is necessary to closest follow the neutral fibre N/F but which path still preferably follows a single closed curve.

The single closed curve is the best adapted and the preferred configuration for resisting a breakdown in sealing integrity of the sealing ring 22 when subjected to cyclic variations. Such cyclic variations may typically arise in and between cylinders 1, 2 from rising and falling cylinder pressures during combustion or from cyclic deformations induced into the cylinder block or cylinder head, e.g. by rotating or reciprocating masses.

A single closed curve is considered advantageous as it may resist cyclic deformation better than a curvilinear path that includes sudden or dramatic changes of direction of the curve, for example changes of direction from a path curving inward to a path curving or heading outwards or even just to a straight path. Such changes might damage a sealing ring at a corner or junction area between directional alterations and/or may be less able than a single closed curve in absorbing changes in some components of vectors of forces that might be causing cyclic distortions.

To this end, it may be noted that the curvilinear path followed by the sealing rings 22 evolves regularly around the circumference of each cylinder 1, 2 and evolves in a single closed curve by varying the path radius. For any neighbouring cylinders 1, 2 the radius of the single closed curve is at its shortest in the inter-cylinder region 26. The path followed by the sealing rings 22 preferably avoids portions running along a straight line. That is because the cylinder barrels 1, 2 are curved in shape themselves and the neutral fibre N/F will also therefore follow a curved path for each such barrel 1, 2.

Referring for the moment in particular to Figure 2, in the inter-cylinder region 26 the sealing rings 22 associated with neighbouring cylinder barrels 1, 2 may be disposed in use along respective curvilinear paths that substantially follow or converge towards an inter-cylinder neutral fibre N/F, as illustrated with particular reference to Figure 2. In cases where it may be difficult or impractical to follow the neutral fibre N/F nearly exactly or all the way around a cylinder barrel 1, 2, the present invention thereby provides for compromises that allow the sealing ring 22 to adopt whatever form is necessary to follow substantially as close as possible or practical the neutral fibre N/F.

In the inter-cylinder region 26 the curvilinear paths may be substantially symmetrically disposed either side of the inter-cylinder neutral fibre N/F. This ensures that in cases where the neutral fibre N/F is not followed substantially exactly, due for example to neighbouring cylinders 1, 2, provision is made to balance the compressive forces about the neutral point so as to spread their load evenly.

Depending on wavy distortion in squeeze of the sheet member 20 or on the lower pressure sealing requirements of the engine, such as the disposition of oil or cooling passages, it may be preferable to run a sealing bead 24 between neighbouring cylinder barrels 1, 2. In that case, assuming enough inter-cylinder material is available, the sealing bead 24 preferably follows or runs across at least a portion of the inter-cylinder neutral fibre N/F, so as to avoid biasing more pressure in squeeze onto the side of one or the other barrel 1, 2. In some cases, however, there may be so little inter-cylinder material 26 that it proves preferable to merge the two converging and neighbouring sealing rings 22 into unity, at least across the narrowest part of the inter-cylinder region 26 (this aspect not being illustrated).

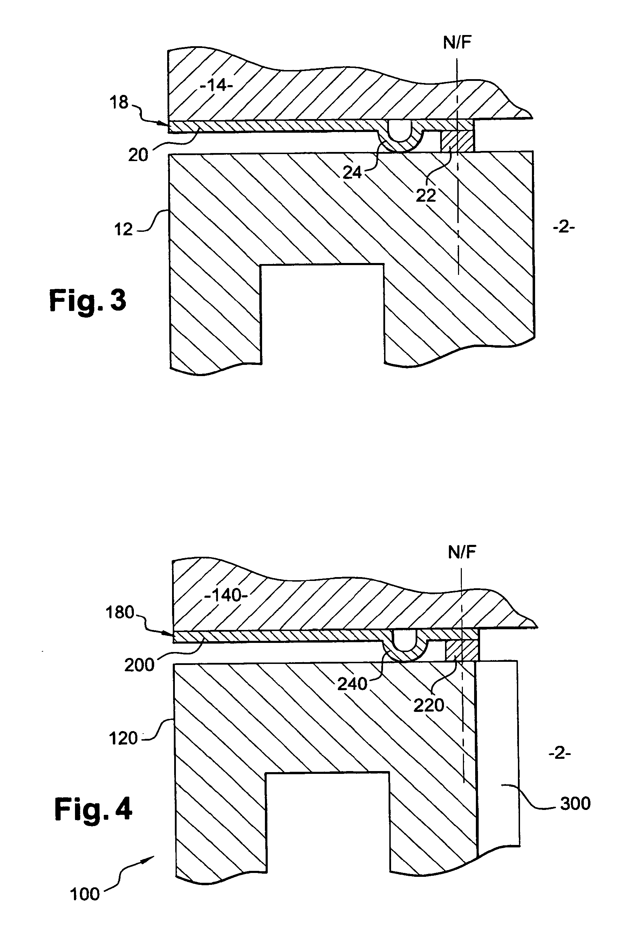

Referring for the moment in particular to Figure 3, in a region of the cylinder block 12 that is nearest to its lateral sides and therefore at about 90 degrees from the inter-cylinder zone 26, the radius of the sealing ring 22 has reached its maximum 28 at the true neutral fibre N/F and there is no need to rely on symmetry between sealing rings 22 to compensate for inter-cylinder block compactness. For an intermediate cylinder 2, as illustrated with particular reference to Figures 1 with 3, this leads to a curvilinear path for the sealing ring 22 that is a single closed curve, substantially elliptical in path. Outboard of the sealing ring 22, a sealing bead 24 may be provided for sealing low pressure passages.

For an end cylinder 1, the curvilinear path from the maximum radius point 28 follows substantially exactly the true neutral fibre N/F of the barrel of the end cylinder 1 around the end region of the cylinder block 12 until it reaches the equivalent point 28 on the opposing side of the cylinder block 12. Inboard of the maximum radius points 28, the sealing ring 22 of the end cylinder 1 converges from both sides towards the inter-cylinder neutral fibre N/F.

Referring now for the moment in particular to Figure 4, a variation to the arrangement of Figures 1 to 3 is disclosed. In the variation, a cylinder liner 300 has been used in the modified cylinder block 120 so as to define the or each cylinder barrel. The view of Figure 4 shows the variation in section in an equivalent view to that of Figure 3 and equivalent features have reference numerals the same as in the earlier views but with the addition of a zero. Providing one or more cylinder barrels 1, 2 defined in the form of a liner 300 may move the location of the neutral fibre N/F for the or each cylinder 1, 2 so equipped.

Such a shift in position of the neutral fibre N/F for the, each or affected barrels may mean the neutral fibre N/F does not lie on the median fibre of the material surrounding the cylinder barrel 2. The shift in the neutral fibre N/F in this instance may be to a position that depends on the thickness and mechanical characteristics of the cylinder block material and also on those of the liner 300. A shift in position of the neutral fibre N/F may then, for example, comprise a radial shift outwards that is related to the Young's modulus of the cylinder block material.

Where a liner 300 is used, whether wet or dry liner, the present invention reduces the likelihood of the liner 300 being distorted by its surrounding material by reducing the likelihood of that material distorting in the first place. In addition, the likelihood of the liner moving, tilting or dropping is also reduced in similar fashion. The same advantages exist as in the first version (Figure 1 to 3) with regard to optimisation of transfer of compressive forces and the robustness of the seal to cyclic variations and distortions.

In some cases where the block 12 comprises a single casting with no liner 300, it may prove necessary to line the inside of the barrels 1, 2 with an abrasion resistant coating, e.g. in some instances where the block is made from a weight-saving alloy such as might include aluminium, magnesium or an alloy including at least one of them in significant proportion. Such coatings tend to be very hard and do not stand up well to the sort of flexure typically resulting from bore distortion. The present invention helps relieve such problems by reducing the chances of bore distortion taking place.

It will be appreciated that, in each variation of the present invention, there may be sufficient cylinder block material available around any one or more barrels for the or each sealing ring 22, 220 to follow substantially exactly the true neutral fibre N/F. In that case, the sealing ring 22; 220 may follow a substantially perfect circular path.

Positioning the sealing ring 22; 220 along the neutral fibre N/F, and thereby directing the cylinder head clamping forces into that fibre, reduces the chances of the vertical component generating a moment about that sealing ring 22; 220 that can lead to distortion of the cylinder barrels 1, 2. Cylinder block deformation from barrel flexure is thus eliminated or much reduced.

Among further advantages of the present invention, the adaptation of the sealing rings 22, 220 to follow substantially the neutral fibre N/F means that the present invention may be applied by modification of only the cylinder head gasket to a cylinder head gasket 18, 180 in accordance with the present invention. This may be implemented without modification to the architecture of the cylinder block 12; 120 or the cylinder head 14; 140. In addition, there is no or little change necessary to the base design, structure or clamping of the cylinder head gasket 18; 180, e.g. to the number of sealing rings 22; 220 and sealing beads 24; 240 used or to the type of clamping. It is necessary to change only the path of transmission of compressive forces into the cylinder block 12; 120 and that is done cheaply through the form of the sealing rings 22; 220. The same structure works in reverse to ensure that the transfer of cyclic distortion into the sealing rings 22, 220 is minimised and the path followed by those sealing rings 22 is optimised to resist weakening of the seal between the cylinder head 14, 140 and the cylinder block 12, 120.

## Claims

1. A cylinder head gasket arrangement with an engine assembly; said engine assembly (10) comprising a cylinder block (12) having defined therein at least one cylinder barrel (1, 2) and a cylinder head (14) adapted to be attached to said cylinder block, said arrangement including : a cylinder head gasket (18) adapted to be compressed between said cylinder head and said cylinder block and comprising a sheet member (20) supporting a sealing ring (22) adapted to seal around said cylinder barrel, **characterised in that** said sealing ring (22) is adapted to follow, around at least a portion of said cylinder barrel (1, 2), a curvilinear path lying substantially along a cylinder block neutral fibre (N/F) associated with said cylinder barrel.

2. An arrangement according to claim 1, wherein said sealing ring (22) is adapted to follow a single closed curve, for example a substantially elliptical curve in the case of an intermediate cylinder (2).

3. An arrangement according to claim 1 or claim 2, said cylinder block (12) comprising a multi-barrel cylinder block and said cylinder head gasket (18) including a sealing ring (22) associated with each said cylinder barrel (1, 2), wherein sealing rings (22) associated with neighbouring said cylinder barrels (1, 2) follow respective said curvilinear paths that, in an inter-cylinder region (26), substantially follow or converge towards an inter-cylinder neutral fibre of said cylinder block (12).

4. An arrangement according to any preceding claim, said cylinder block (12) comprising a multi-barrel cylinder block and said cylinder head gasket (18) including a sealing ring (22) associated with each said cylinder barrel (1, 2), wherein sealing rings (22) associated with neighbouring said cylinder barrels (1, 2) follow respective said curvilinear paths that, in an inter-cylinder region (26), are substantially symmetrically disposed about an inter-cylinder neutral fibre of said cylinder block (12).

5. An arrangement according to any preceding claim, wherein said engine assembly (10) comprises a multi-cylinder engine and said gasket sheet member (20) further supports a sealing bead (24), such as a corrugation or elastomeric seal, that is adapted to follow substantially a neutral fibre (N/F) in at least a portion of an inter-cylinder region (26).

6. An arrangement according to any preceding claim, wherein said gasket sheet member (20) comprises a metallic sheet, preferably a multi-layer metallic laminate, and the or each said sealing ring (22) comprises a combustion gas seal, such as a fire ring.

7. A method of producing a cylinder head gasket, the method including:
a) providing a sheet member (20) defining therethrough one or more cylinder barrel holes; and
b) providing around one or more of said cylinder barrel holes a sealing ring (22) that is adapted to follow, around at least a portion of a said cylinder barrel hole, a curvilinear path lying substantially along a cylinder block neutral fibre (N/F) associated with said cylinder barrel hole.

8. An engine assembly including a cylinder head gasket arrangement according to any one of claims 1 to 6 or a cylinder head gasket (18; 180) made using the method of claim 7.

9. An engine assembly according to claim 8, wherein said engine assembly (10; 100) includes a cylinder block (12; 120) comprising aluminium, magnesium or an alloy including at least one thereof.

10. An engine assembly according to claim 8 or claim 9, wherein said cylinder block (120) comprises a cylinder liner (300) that defines a said cylinder barrel (1, 2).

## Patentansprüche

1. Zylinderkopfdichtungsanordnung mit einer Motoranordnung; wobei die Motoranordnung (10) einen Zylinderblock (12), in dem mindestens eine Zylinderbohrung (1, 2) definiert ist, und einen Zylinderkopf (14), der zur Befestigung an dem Zylinderblock ausgeführt ist, umfasst, wobei die Anordnung eine Zylinderkopfdichtung (18) enthält, die dazu ausgeführt ist, zwischen dem Zylinderkopf und dem Zylinderblock komprimiert zu werden und ein Flächenglied (20) umfasst, das einen Dichtungsring (22) stützt, der dazu ausgeführt ist, eine Dichtung um den Zylinderblock herum zu bilden, **dadurch gekennzeichnet, dass** der Dichtungsring (22) dazu ausgeführt ist, um mindestens einen Teil der Zylinderbohrung (1, 2) herum einem krummlinigen Weg zu folgen, der im Wesentlichen entlang einer neutralen Faser (N/F) des Zylinderblocks liegt, die der Zylinderbohrung zugeordnet ist.

2. Anordnung nach Anspruch 1, wobei der Dichtungsring (22) dazu ausgeführt ist, einer einzigen geschlossenen Kurve zu folgen, zum Beispiel einer im Wesentlichen elliptischen Kurve im Falle eines Zwischenzylinders (2).

3. Anordnung nach Anspruch 1 oder 2, wobei der Zylinderblock (12) einen Mehrbohrungs-Zylinderblock umfasst und die Zylinderkopfdichtung (18) einen Dichtungsring (22) umfasst, der jeder solchen Zylinderbohrung (1, 2) zugeordnet ist, wobei benachbarten der Zylinderbohrungen (1, 2) zugeordnete Dichtungsringe (22) jeweiligen krummlinigen Wegen folgen, die in einem zwischen den Zylindern liegenden Bereich (26) einer zwischen den Zylindern liegenden neutralen Faser des Zylinderblocks (12) folgen oder zu ihr konvergieren.

4. Anordnung nach einem vorhergehenden Anspruch, wobei der Zylinderblock (12) einen Mehrbohrungs-Zylinderblock umfasst und die Zylinderkopfdichtung (18) einen Dichtungsring (22) umfasst, der jeder solchen Zylinderbohrung (1, 2) zugeordnet ist, wobei benachbarten der Zylinderbohrungen (1, 2) zugeordnete Dichtungsringe (22) jeweiligen krummlinigen Wegen folgen, die in einem zwischen den Zylindern liegenden Bereich (26) im Wesentlichen symmetrisch um eine zwischen den Zylindern liegende neutrale Faser des Zylinderblocks (12) angeordnet sind.

5. Anordnung nach einem vorhergehenden Anspruch, wobei die Motoranordnung (10) einen Mehrzylindermotor umfasst und das Dichtungsflächenglied (20) weiterhin einen Dichtungswulst (24), wie zum Beispiel eine Wellung oder eine elastomere Dichtung, stützt, die dazu ausgeführt ist, einer neutralen Faser (N/F) in mindestens einem Teil eines zwischen den Zylindern liegenden Bereichs (26) im Wesentlichen zu folgen.

6. Anordnung nach einem vorhergehenden Anspruch, wobei das Dichtungsflächenglied (20) eine metallische Fläche, vorzugsweise ein mehrschichtiges Metalllaminat, umfasst und der oder jeder Dichtungsring (22) eine Verbrennungsgasdichtung, wie zum Beispiel einen Feuerring, umfasst.

7. Verfahren zur Herstellung einer Zylinderkopfdichtung, wobei das Verfahren Folgendes umfasst:
a) Bereitstellen eines Flächenglieds (20), in dem ein oder mehrere Zylinderbohrungslöcher definiert sind; und
b) Bereitstellen eines Dichtungsrings (22) um ein oder mehrere der Zylinderbohrungslöcher herum, der dazu ausgeführt ist, um mindestens einen Teil des Zylinderbohrungslochs herum einer krummlinigen Bahn zu folgen, die im Wesentlichen entlang einer neutralen Faser (N/F) des Zylinderblocks, die dem Zylinderbohrungsloch zugeordnet ist, liegt.

8. Motoranordnung, die eine Zylinderkopfdichtungsanordnung nach einem der Ansprüche 1 bis 6 oder eine Zylinderkopfdichtung (18; 180), die unter Verwendung des Verfahrens nach Anspruch 7 hergestellt ist, enthält.

9. Motoranordnung nach Anspruch 8, wobei die Motoranordnung (10; 100) einen Zylinderblock (12; 120) enthält, der Aluminium, Magnesium oder eine mindestens eines davon enthaltende Legierung umfasst.

10. Motoranordnung nach Anspruch 8 oder 9, wobei der Zylinderblock (120) eine Zylinderbuchse (300) umfasst, die eine Zylinderbohrung (1, 2) definiert.

## Revendications

1. Dispositif de joint de culasse associé à un ensemble moteur ; ledit ensemble moteur (10) comprenant un bloc-cylindres (12) dans lequel est défini au moins un fût de cylindre (1, 2) et une culasse (14) adaptée à être assujettie audit bloc-cylindres, ledit dispositif comprenant : un joint de culasse (18) adapté à être comprimé entre ladite culasse et ledit bloc-cylindres et comprenant un élément en feuille (20) portant un anneau d'étanchéité (22) adapté à assurer l'étanchéité autour du dudit fût de cylindre, **caractérisé en ce que** ledit anneau d'étanchéité (22) est adapté à suivre, autour d'au moins une partie dudit fût de cylindre (1, 2), un chemin curviligne s'étendant sensiblement le long d'une fibre neutre de bloc-cylindres associée audit fût de cylindre.

2. Dispositif selon la revendication 1, dans lequel ledit anneau d'étanchéité (22) est adapté à suivre une courbe fermée unique, par exemple une courbe sensiblement elliptique dans le cas d'un cylindre intermédiaire (2).

3. Dispositif selon la revendication 1 ou la revendication 2, ledit bloc-cylindres (12) comprenant un bloc-cylindres à multiples fûts de cylindres et ledit joint de culasse (18) incluant un anneau d'étanchéité (22) associé à chacun desdits fûts de cylindres (1, 2), dans lequel les anneaux d'étanchéité (22) associés auxdits fûts de cylindre (1, 2) voisins suivent lesdits chemins curvilignes respectifs qui, dans une région inter-cylindres (26), suivent sensiblement ou convergent vers une fibre neutre inter-cylindres dudit bloc-cylindres (12).

4. Dispositif selon l'une quelconque des revendications précédentes, ledit bloc-cylindres (12) comprenant un bloc-cylindres à multiples fûts de cylindres et ledit joint de culasse (18) incluant un anneau d'étanchéité (22) associé à chacun desdits fûts de cylindres (1, 2), dans lequel les anneaux d'étanchéité (22) associés auxdits fûts de cylindres (1, 2) voisins suivent lesdits chemins curvilignes respectifs qui, dans une région inter-cylindres (26), sont disposés de manière sensiblement symétrique sur une fibre neutre inter-cylindres dudit bloc-cylindres (12).

5. Dispositif selon l'une quelconque des revendications précédentes, dans lequel ledit ensemble moteur (10) comprend un moteur multicylindres et ledit élément en feuille de joint de culasse (20) porte en outre un cordon d'étanchéité (24), comme une nervure ou un joint élastomère, qui est adapté à suivre sensiblement une fibre neutre sur au moins une partie d'une région inter-cylindres (26).

6. Dispositif selon l'une quelconque des revendications précédentes, dans lequel ledit élément en feuille de joint de culasse (20) comprend une feuille métallique, préférablement une feuille métallique multicouches, et ledit anneau d'étanchéité ou chacun desdits anneaux d'étanchéité (22) comprend un anneau d'étanchéité à gaz de combustion, de type anneau pare flamme.

7. Procédé de fabrication d'un joint de culasse, le procédé comprenant :
a) la production d'un élément en feuille (20) à travers lequel sont ménagés un ou plusieurs passages de fûts de cylindres ; et
b) la production autour dudit ou desdits passages de fûts de cylindres d'un anneau pare flamme (22) qui est adapté à suivre, autour d'au moins une partie dudit passage de fût de cylindre, un chemin curviligne s'étendant sensiblement le long d'une fibre neutre de bloc-cylindres associée audit passage de fût de cylindre.

8. Ensemble moteur comprenant un dispositif de joint de culasse selon l'une quelconque des revendications 1 à 6 ou un joint de culasse (18 ; 180) fabriqué en utilisant le procédé divulgué à la revendication 7.

9. Ensemble moteur selon la revendication 8, dans lequel ledit ensemble moteur (10 ; 100) comprend un bloc-cylindres (12 ; 120) contenant de l'aluminium, du magnésium ou un alliage incorporant au moins un de ces deux métaux.

10. Ensemble moteur selon la revendication 8 ou la revendication 9, dans lequel ledit bloc-cylindres (120) comprend une chemise de cylindre (300) qui définit un dit fût de cylindre (1, 2).
